(19) Europäisches Patentamt
European Patent Office
Office européen des brevets

(11) **EP 4 765 223 A1**

(12) **EUROPEAN PATENT APPLICATION**
published in accordance with Art. 153(4) EPC

(43) Date of publication:
**24.06.2026  Bulletin 2026/26**

(21) Application number: **24898215.9**

(22) Date of filing: **29.11.2024**

(51) International Patent Classification (IPC):
$H01M\ 4/131$ (2010.01)     $H01M\ 4/1391$ (2010.01)
$H01M\ 4/525$ (2010.01)     $H01M\ 4/505$ (2010.01)
$H01M\ 4/62$ (2006.01)      $H01M\ 4/04$ (2006.01)
$H01M\ 10/052$ (2010.01)    $H01M\ 4/02$ (2006.01)

(52) Cooperative Patent Classification (CPC):
H01M 4/02; H01M 4/04; H01M 4/131;
H01M 4/1391; H01M 4/505; H01M 4/525;
H01M 4/62; H01M 10/052; Y02E 60/10

(86) International application number:
**PCT/KR2024/019310**

(87) International publication number:
**WO 2025/116621 (05.06.2025 Gazette 2025/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   01.12.2023   KR 20230172774

(71) Applicant: **LG Energy Solution, Ltd.**
**Seoul 07335 (KR)**

(72) Inventors:
• **YANG, Jeong Min**
  **Daejeon 34122 (KR)**
• **LEE, Nam Jeong**
  **Daejeon 34122 (KR)**

• **SHIN, Dong Mok**
  **Daejeon 34122 (KR)**
• **KWAK, Sang Min**
  **Daejeon 34122 (KR)**
• **SHIN, Dong Oh**
  **Daejeon 34122 (KR)**
• **JUNG, Jong Hyun**
  **Daejeon 34122 (KR)**
• **HAN, Seung Hee**
  **Daejeon 34122 (KR)**
• **OH, Sol Seon**
  **Daejeon 34122 (KR)**
• **PARK, Yo Sub**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **ELECTRODE COMPOSITE FILM, MANUFACTURING METHOD THEREFOR, AND LITHIUM SECONDARY BATTERY COMPRISING SAME**

(57)    The present invention relates to an electrode mixture film including a binder having a three-dimensional fiber network structure, and an electrode active material accommodated in the fiber network structure, wherein an R value defined by factors of density and tensile strength of the electrode mixture film is 5.0 to 10.0, and by increasing sheeting completeness of the electrode mixture film, the electrode mixture film may satisfy the range of the R value, through which it is possible to provide an electrode mixture film having excellent mechanical strength and excellent appearance characteristics and allowing a lamination process with a current collector to be stably performed.

EP 4 765 223 A1

**Description**

**FIELD OF ART**

This disclosure relates to an electrode mixture film, a method for manufacturing the same, and a lithium secondary battery including the same.

**BACKGROUND OF ART**

A secondary battery is applied and used in small products such as digital cameras, P-DVDs, MP3Ps, mobile phones, PDAs, portable game devices, power tools, and e-bikes, as well as large products that require high power, such as electric vehicles or hybrid vehicles, and power storage devices for storing surplus generated power or renewable energy, and power storage devices for backup power.

Typically, a secondary battery is manufactured by applying an electrode active material slurry on a positive electrode current collector and a negative electrode current collector to form an electrode active material layer, and then performing drying and roll-pressing processes thereon to manufacture a positive electrode and a negative electrode, followed by stacking the positive electrode and the negative electrode on both sides of a separator to form an electrode assembly having a predetermined shape, and then accommodating the electrode assembly in a battery case, followed by injecting an electrolyte thereinto and sealing the case.

Meanwhile, in the process of drying the electrode active material, a solvent contained in the slurry evaporates, which may cause defects such as pinholes or cracks on the electrode active material layer formed on the current collector. In addition, since the inside and outside of the electrode active material slurry are not uniformly dried in the drying process, there is a risk that the quality of the electrode is degraded due to a powder floating phenomenon caused by the difference in solvent evaporation rate, that is, the phenomenon in which powder in a portion dried first rises, thereby forming a gap with a portion dried relatively later.

In order to solve the above-described problem, a drying apparatus and the like capable of adjusting the evaporation rate of a solvent are being considered such that the inside and outside of an electrode active material slurry are uniformly dried, but such drying apparatuses are very expensive and cost a significant amount of money and time in operation, and thus are disadvantageous in terms of manufacturing processability.

On the other hand, a solvent included in a typical electrode active material slurry is N-methyl-2-pyrrolidone (NMP), which has a high boiling point, so that it requires high heat energy and a very long drying furnace to dry that same, making it very disadvantageous in mass production. In addition, N-methyl-2-pyrrolidone (NMP) is a toxic material and is harmful to living things, and thus, has a disadvantage of not being environmentally friendly.

Therefore, recently, research on a dry electrode in which an electrode is manufactured without using a solvent has been actively conducted. The dry electrode is generally manufactured by laminating a free-standing type electrode mixture film, which includes an electrode active material, a binder, a conductive material, etc., on a current collector. The above-described electrode mixture film includes a process of first mixing the electrode active material, a carbon material as the conductive material, and a fiberizable binder together by a blender or the like, and fiberizing the binder by imparting shear force thereto through a process such as jet-milling or kneading, and then calendarizing an obtained mixture into a film form to manufacture a free-standing film.

Meanwhile, in the process of manufacturing the electrode mixture film, powder for an electrode is introduced into a calendaring roll and roll-pressed to manufacture an electrode mixture film, wherein it is difficult to control a roll-to-roll process using a roll-pressing roll, and if the number of times of performing calendaring, roll gaps, or the like is not properly controlled, there is a problem in that the defect rate of films increases, and there is a problem in that an electrode mixture film thus manufactured is poor in appearance characteristics, resistance properties, or the like.

Therefore, there is a demand for the development of a dry electrode in which the mechanical strength of an electrode mixture film is maintained in the process of performing calendaring by a roll-pressing roll in a roll-to-roll process, and a finally manufactured electrode has excellent properties.

**DISCLOSURE OF INVENTION**

**TECHNICAL PROBLEM**

In order to solve the above-described problem, the disclosure provides forming an electrode mixture film having excellent mechanical properties and excellent appearance characteristics and resistance properties by controlling compression density of the electrode mixture film, and tensile strength in a MD direction and a TD direction thereof.

In addition, in order to provide an electrode mixture film having the above-described properties so as to solve the above-described problem, the disclosure provides a method for manufacturing an electrode mixture film, the method controlling the roll-gap reduction rate of a roll-pressing roll when sheeting powder for an electrode into an electrode mixture film using the roll-pressing roll in a roll-to-roll process, and controlling the compression density increase rate of the film before and after the sheeting.

In addition, in order to solve the above-described problem, the disclosure provides a dry electrode to which the above-described electrode mixture film is applied, the dry electrode having excellent resistance properties, and excellent durability due to excellent mechanical properties, thereby providing a lithium secondary battery with improved output properties and lifespan properties.

## TECHNICAL SOLUTION

[1] In an aspect, there is provided an electrode mixture film including a binder having a three-dimensional fiber network structure, and an electrode active material accommodated in the fiber network structure, wherein an R value defined by Equation 1 below is 5.0 to 10.0.

$$[\text{Equation 1}]$$

$$R = [d \times (TS_M)]/[(TS_T)]$$

In Equation 1 above, the d is a compression density of the electrode mixture film, and is the number of no units when the unit is g/cc, the $TS_M$ is a tensile strength in a MD direction of the electrode mixture film, and the $TS_T$ is a tensile strength in a TD direction of the electrode mixture film.

[2] In [1] above, R defined by Equation 1 above may be 6.5 to 9.5.

[3] In [1] and/or [2] above, the electrode mixture film may have a ratio $TS_M/TS_T$ of the tensile strength in the MD direction $TS_M$ to the tensile strength in the TD direction $TS_T$ of 1.5 to 3.5.

[4] In at least one of [1] to [3] above, the electrode mixture film may have a ratio $TS_M/TS_T$ of the tensile strength in the MD direction $TS_M$ to the tensile strength in the TD direction $TS_T$ of 2.0 to 3.2.

[5] In at least one of [1] to [4] above, the electrode mixture film may have a compression density of 2.4 g/cc to 3.4 g/cc.

[6] In at least one of [1] to [5] above, the electrode active material may include a lithium transition metal compound containing one or more selected from the group consisting of nickel (Ni), cobalt (Co), manganese (Mn), and iron (Fe).

[7] In at least one of [1] to [6] above, the binder may include polytetrafluoroethylene (PTFE).

[8] In another aspect, there is provided a method for manufacturing the above-described electrode mixture film, the method including, in a roll-to-roll process including two or more pairs of roll-pressing rolls, (S1) manufacturing a preliminary mixture film by powder-sheeting powder for an electrode including an electrode active material and a binder, and (S2) sheeting the preliminary mixture film three or more times, while reducing a roll gap of the roll-pressing rolls as the number of rounds of the sheeting increases.

[9] In [8] above, the step S2 may perform the sheeting such that the tensile strength in the MD direction of the electrode mixture film is 0.65 MPa or greater.

[10] In [8] and/or [9] above, the step S2 may be controlled such that a compression density increase rate of the preliminary mixture film by the sheeting is 5.0% or less.

[11] In at least one of [8] to [10] above, the step S2 may be controlled such that the roll gap of the first round of sheeting is reduced by 60% to 80% with respect to the roll gap of the powder-sheeting of the step S1.

[12] In at least one of [8] to [11] above, the step S2 may be controlled such that the roll gap of an N-th round of sheeting is reduced by 30% to 60% with respect to the roll gap of an (N-1)-th round of sheeting, wherein the N may be an integer of 2 to 5.

[13] In yet another aspect, there is provided a lithium secondary battery including a dry electrode, wherein the dry electrode includes the above-described electrode mixture film.

[14] In [13] above, the dry electrode may be a dry positive electrode.

## ADVANTAGEOUS EFFECTS

An electrode mixture film disclosed in the disclosure may have excellent mechanical properties and excellent appearance characteristics and resistance properties by controlling the roll-gap reduction rate of a roll-pressing roll when sheeting powder for an electrode into an electrode mixture film using the roll-pressing roll in a roll-to-roll process, and controlling the compression density increase rate of the film before and after the sheeting, thereby controlling compression density of the electrode mixture film, and tensile strength in a MD direction and a TD direction thereof.

In addition, a lithium secondary battery disclosed in the disclosure may have improved output properties and lifespan properties by including a dry electrode having excellent durability due to excellent mechanical properties of an electrode mixture film, and having improved electrode resistance due to excellent appearance characteristics.

**MORD FOR CARRYING OUT INVENTION**

It will be understood that terms or words used in the disclosure and claims shall not be construed as being limited to having meanings defined in commonly used dictionaries, but should be interpreted as having meanings and concepts consistent with the technical idea of the present invention based on the principle that an inventor may appropriately define concepts of the terms to best explain the invention.

In the disclosure, the machine direction (MD) refers to the longitudinal direction of an electrode mixture film, and the transverse direction (TD) refers to the width direction of the electrode mixture film.

In the disclosure, "volume cumulative average particle diameter $D_{50}$" means a particle diameter corresponding to 50% of the volume accumulation in a particle diameter distribution curve of particles. The $D_{50}$ may be measured by, for example, a laser diffraction method. The laser diffraction method generally enables measurement of a particle diameter from a sub-micron region to several millimeters, so that results of high reproducibility and high resolution may be obtained.

In the disclosure, "mixture composition" means a mixture including an electrode active material and a binder (selectively, including a conductive material), which have been physically mixed to a uniform dispersion phase, and may be a mixture in a powder phase as a product of a mixing process (mixing process) in accordance with the disclosure, and may be one in which no solvent is substantially involved. Here, the meaning of no substantial involvement of a solvent means that when the mixture composition is obtained by mixing, a solvent is not introduced or only a trace amount of solvent is introduced.

In the disclosure, "mixed aggregate" is a product of a kneading process (kneading process) in accordance with the disclosure, in which the mixture composition is subjected to shear force, thereby fiberizing the binder to allow the mixture in the powder state to be bonded or connected to each other and converted into an aggregate in a dough state, wherein the product is 100% solid.

In the disclosure, "powder for an electrode" may refer to a material in a state in which the mixed aggregate is pulverized, thereby having a smaller particle size and being in a powder phase.

In the disclosure, "electrode mixture film" may be manufactured in the form of a free-standing type single sheet by using the above-described powder for an electrode. In the disclosure, the term 'free-standing type' means that it may maintain its independent form without relying on other members, and that it may move or handle on its own. As to be described below, the electrode mixture film may be formed by pressing the powder for an electrode, and for example, may have a shape of a layered structure formed by integration due to the compression.

In the disclosure, "preliminary mixture film" refers to a film from the time powder for an electrode forms a sheet form through a powder-sheeting process in which the powder for an electrode first passes through a roll-pressing roll in a roll-to-roll process until the time the sheet passes through the last roll-pressing roll in the process, and may be a free-standing type sheet, which may be a sheet weak in maintaining force, and the term may be used interchangeably with 'powder-sheeting film.' Here, the 'powder-sheeting" means that powder for an electrode is manufactured in the form of a free-standing type sheet by calendaring, wherein the 'sheeting' may mean a calendaring process performed in a process of manufacturing the powder-sheeted preliminary mixture film into an electrode mixture film.

In the disclosure, "three-dimensional fiber network structure" may mean a structure that may be formed by fiberization of a binder in a process of sheet-molding an electrode mixture film from a mixture composition including an electrode active material and the binder. Specifically, the three-dimensional fiber network structure may refer to various structures in which microfibers formed by the fiberization of the binder form a skeleton, thereby functioning as a support that enables the electrode mixture film to be a free-standing film. At this time, the electrode active material and, selectively, a conductive material may be accommodated in pores formed in the three-dimensional fiber network structure.

**Electrode mixture film**

In an aspect, the electrode mixture film is characterized by including a binder having a three-dimensional fiber network structure, and an electrode active material accommodated in the fiber network structure, wherein an R value defined by Equation 1 below is 5.0 to 10.0.

$$[\text{Equation 1}]$$

$$R = [d \times (TS_M)]/[(TS_T)]$$

In Equation 1 above, the d is a compression density of the electrode mixture film, and is the number of no units when the unit is g/cc, the $TS_M$ is a tensile strength in a MD direction of the electrode mixture film, and the $TS_T$ is a tensile strength in a TD direction of the electrode mixture film.

As the electrode mixture film goes through various processes including a mixing (mixing) process of forming a mixture composition, a kneading (kneading) process of kneading the mixture composition to form a mixed aggregate, a process of pulverizing the mixed aggregate, which is the form of an aggregate in which the mixed composition is kneaded, and a process of sheeting powder for an electrode in which the mixed aggregate is pulverized, the mechanical properties, appearance properties, and performance properties of an electrode are affected by various factors. Particularly, the process of sheeting the powder for an electrode is a roll-to-roll process using a roll-pressing roll, so that the process difficulty is high, and since it is a process of preparing powder in the form of a sheet without a special solvent, there is a problem in that there is a significant difference in performance in terms of mechanical properties and appearance characteristics of a manufactured film.

As roll-pressing is performed from the powder-sheeting of the roll-to-roll process to the subsequent sheeting process, it is necessary to control the processes such that the loading amount and density of an electrode reach a target level, and in order to enable continuous processing in this process, the mechanical properties of a preliminary mixture film by the initial powder-sheeting have a significant impact.

Accordingly, in the disclosure, in order to ensure the mechanical strength and the appearance characteristics of an electrode mixture film, the appearance characteristics including not only the appearance characteristics visible to the naked eye, but also all potentially present cracks, etc., R is defined using the tensile strength in the MD direction, tensile strength in the TD direction, and compression density of the electrode mixture film to allow an R value to satisfy 5 to 10, thereby providing an electrode mixture film having excellent mechanical strength and excellent appearance characteristics.

*R value of Equation 1: Tensile strength ratio and compression density*

According to an embodiment, the electrode mixture film has an R value defined by Equation 1 above of 5 to 10. The R value is defined as the ratio of the product of tensile strength in the MD direction $TS_M$ and the compression density d to tensile strength in the TD direction $TS_T$, and it may mean that the tensile strength in the MD direction to the tensile strength in the TD direction satisfies an adequate level, but the ratio of the above-described tensile strength may be adjusted in relation to the compression density of the electrode mixture film.

The electrode composite film is manufactured in the form of a free-standing type sheet as the fiberizable binder is fiberized through the above-described process, and the fiberized binder forms a three-dimensional fiber network structure, wherein the orientation of the binder may play an important role in the process of manufacturing the film in the form of a sheet. Depending on the orientation of the binder, the tensile strength may differ according to the direction of the film, and it may be preferable in terms of stability of a free-standing type film that the tensile strength in the MD direction has a value greater than that of the tensile strength in the TD direction.

Meanwhile, since the sheet is manufactured through a roll-to-roll process, it is difficult to control the tensile strength value in the TD direction, so that there is an attempt to secure the tensile strength in the MD direction through the control of process conditions, but in this process, a film is damaged due to excessive roll-pressing. However, this tendency may change depending on the compression density of the film. That is, even if the tensile strength in the MD direction has an adequate value with respect to the tensile strength in the TD direction, if the compression density is low, durability may be weak due to a low density even though the orientation is excellent, and even if the compression density is excellent, if the tensile strength in the MD direction is too large with respect to the tensile strength in the TD direction, there may be a problem in which a preliminary mixture film may be cracked or broken during a roll-pressing process, so that it is necessary to determine the strength stability or durability of an electrode mixture film through establishing an relational equation, such as the one that defines the R value.

If the R value is less than 5, the $TS_M/TS_T$ ratio is 2 or less due to low tensile strength in the MD direction, or the compression density is small, which may mean the failure of control of a continuous process in a series of powder-sheeting and sheeting by a roll-to-roll process, and even if the continuous process is controlled, additional roll-pressing may be required due to a low compression density, so that there is a problem of rather increasing the possibility of film breakage. An electrode mixture film thus manufactured may have poor appearance characteristics, and in particular, tearing at an end in the width direction of the electrode mixture film may be noticeable, and accordingly, the difference between a maximum value and a minimum value in the width direction significantly increases, which may result in a problem in that the utilization as an electrode is very low.

In addition, if the R value is greater than 10, it may be said that there are pinholes which are hardly visible to the naked eye, or potential cracks in the electrode mixture film. That is, the tensile strength in the MD direction may be too high compared to the tensile strength in the TD direction, or the compression density may be quite high, in which case, the linear pressure is excessively high during roll-pressing, thereby rapidly increasing the possibility of breakage due to shear force or the possibility of breakage due to an external impact, which may eventually cause a problem of damage during a lamination process with a current collector or a cell assembly process, or cracking in either direction during a process of charging and discharging a cell, so that there is a need to adjust the R value so as not to become too large.

Therefore, the R value needs to be adjusted to 5 to 10, and preferably, the R value may be 5.5 or greater, 5.7 or greater, 6.0 or greater, 6.5 or greater, or 6.8 or greater, and also, may be 9.8 or less, 9.6 or less, 9.5 or less, 9.4 or less, or 9.2 or less.

In an aspect, the electrode mixture film may have a ratio $TS_M/TS_T$ of tensile strength in the MD direction $TS_M$ to tensile strength in the TD direction $TS_T$ of 1.5 to 3.5. The ratio of the tensile strength in the MD direction to the tensile strength in the TD direction is a basic factor that determines the mechanical strength of an electrode, and the tensile strength in the MD direction should be higher than the tensile strength in the TD direction, but if the value becomes too high, anisotropic properties of the electrode mixture film may become too strong, thereby increasing the occurrence rate of defects in one direction compared to the strength of the film itself. Therefore, it is preferable that the tensile strength in the MD direction to the tensile strength in the TD direction satisfies the above-described range, and the lower limit thereof may be 1.7 or greater, 1.9 or greater, 2.0 or greater, or 2.2 or greater, and the upper limit thereof may be 3.4 or less, 3.2 or less, or 3.0 or less.

In an aspect, the electrode mixture film may have a compression density of 2.4 g/cc to 3.4 g/cc, preferably 2.5 g/cc or greater, 2.6 g/cc or greater, or 2.7 g/cc or greater, and also, may be 3.2 g/cc or less, 3.1 g/cc or less, or 3.0 g/cc or less. In some cases, the compression density corresponds to an essential property to be achieved when manufacturing an electrode, and the numerical value thereof to be achieved for each target may vary, but needs to be carefully considered in terms of satisfying the defined R value along with the ratio of tensile strength in the MD direction to tensile strength in the TD direction described above.

That is, even if a desired compression density value is achieved, if the R value is not satisfied due to the ratio of tensile strength, it may be expected to cause a problem with the mechanical strength or appearance characteristics of the electrode mixture film, and even if a value falls a little short of the target value, it is preferable that the value is considered together with the ratio of tensile strength rather than being considered alone, since the ratio of tensile strength may compensate for features of the mechanical strength or appearance characteristics.

In an aspect, the electrode mixture film includes an electrode active material and a fiberizable binder, and may selectively further include a conductive material.

*Electrode active material*

In an aspect, the electrode active material is not particularly limited as long as it is a commonly used electrode active material, and for example, the electrode active material may be a positive electrode active material or a negative electrode active material.

The positive electrode active material is a compound capable of reversible intercalation and deintercalation of lithium and may include a lithium transition metal compound which contains one or more selected from the group consisting of nickel (Ni), cobalt (Co), manganese (Mn), and iron (Fe).

Specifically, the positive electrode active material may include a lithium metal oxide containing one or more metals such as cobalt, manganese, nickel, or aluminum and lithium. More specifically, the lithium metal oxide may be a lithium-manganese-based oxide (e.g., $LiMnO_2$, $LiMn_2O_4$, etc.), a lithium-cobalt-based oxide (e.g., $LiCoO_2$, etc.), a lithium-nickel-based oxide (e.g., $LiNiO_2$, etc.), a lithium-nickel-manganese-based oxide (e.g., $LiNi_{1-Y}Mn_YO_2$ (wherein 0<Y<1), $LiMn_{2-Z}Ni_ZO_4$ (wherein 0 < Z < 2), etc.), a lithium-nickel-cobalt-based oxide (e.g., $LiNi_{1-Y1}Co_{Y1}O_2$ (wherein 0<Y1<1), etc.), a lithium-manganese-cobalt-based oxide (e.g., $LiCo_{1-Y2}Mn_{Y2}O_2$ (wherein 0<Y2<1), $LiMn_{2-Z1}Co_{Z1}O_4$ (wherein 0 < Z1 < 2), etc.), a lithium-nickel-manganese-cobalt-based oxide (e.g., $Li(Ni_pCo_qMn_r)O_2$ (wherein 0<p< 1, 0< q< 1, 0 < r < 1, and p+q+r=1) or $Li(Ni_{p1}Co_{q1}Mn_{r1})O_4$ (wherein 0<p1 <2, 0< q1 <2, 0<r1 <2, and p1+q1+r1=2), etc.), or a lithium-nickel-cobalt-transition metal (M) oxide (e.g., $Li(Ni_{p2}Co_{q2}Mn_{r2}M_{s2})O_2$ (wherein M is selected from the group consisting of Al, Fe, V, Cr, Ti, Ta, Mg, and Mo, and p2, q2, r2, and s2 are respectively atomic fractions of stand-alone elements, wherein 0 < p2 < 1, 0 < q2 < 1, 0 < r2 < 1, 0 < s2 < 1, and p2+q2+r2+s2=1), etc.) and the like, and any one thereof or a compound of two or more thereof may be included.

In addition, the positive electrode active material may include a lithium metal phosphate-based compound containing iron, for example, a lithium iron phosphate, and for example, may be represented by Formula 1 below.

[Formula 1]     $Li_{1+a}Fe_{1-x}M_xPO_4$

In Formula 1 above, M is one or more selected from Mn, Co, Ni, Al, Mg, and Ti, and $-0.5 \le a \le 0.5$, and $0 \le x < 1$.

If the positive electrode active material is a lithium metal phosphate-based compound, particularly a lithium iron phosphate, the positive electrode active material is guaranteed to be safe but has a disadvantage of having a relatively small capacity compared to a lithium nickel-based oxide, but according to an embodiment of the present invention, since a dry electrode capable of high loading may be implemented, a lithium secondary battery to which the lithium iron phosphate having improved capacity and excellent safety is applied and which has excellent unit price competitiveness may be implemented.

Among these, in terms of being able to increase the capacity and stability of a battery, the lithium metal oxide may be $LiCoO_2$, $LiMnO_2$, $LiNiO_2$, a lithium nickel-manganese-cobalt oxide (e.g., $Li(Ni_{1/3}Mn_{1/3}Co_{1/3})O_2$, $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, $Li(Ni_{0.8}Mn_{0.1}Co_{0.1})O_2$.), etc.) a lithium-nickel-cobalt-aluminum oxide (e.g., $Li(Ni_{0.8}Co_{0.15}Al_{0.05})O_2$, etc.), a lithium-nickel-manganese-cobalt-aluminum oxide (e.g., $Li(Ni_{0.86}Co_{0.05}Mn_{0.07}Al_{0.02})O_2$), a lithium iron phosphate (e.g., $LiFePO_4$), or the like, and any one thereof or a mixture of two or more thereof may be used, or one doped with one or more transition metals may be applied.

The negative electrode active material may include at least one selected from the group consisting of a lithium metal, a carbon material capable of reversibly intercalate/de-intercalate lithium ions, a metal or an alloy of the metal and lithium, a metal composite oxide, a material capable of doping and undoping lithium, and a transition metal oxide.

As the carbon material capable of reversibly intercalate/de-intercalate lithium ions, a carbon-based negative electrode active material commonly used in a lithium ion secondary battery may be used without particular limitation, and representative examples thereof may include a crystalline carbon, an amorphous carbon, or a combination thereof. Examples of the crystalline carbon may include graphite such as an irregular, planar, flaky, spherical, or fibrous natural graphite or artificial graphite, and examples of the amorphous carbon may include soft carbon (low-temperature fired carbon) or hard carbon, mezophase pitch carbides, fired cokes, and the like.

As the metal or the alloy of the metal and lithium, a metal selected from the group consisting of Cu, Ni, Na, K, Rb, Cs, Fr, Be, Mg, Ca, Sr, Si, Sb, Pb, In, Zn, Ba, Ra, Ge, Al, and Sn, or an alloy of the metal and lithium may be used.

As the metal composite oxide, one selected from the group consisting of PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, $Bi_2O_5$, $Li_xFe_2O_3(0 \leq x \leq 1)$, $Li_xWO_2(0 \leq x \leq 1)$, and $Sn_xMe_{1-x}Me'_yO_z$(Me: Mn, Fe, Pb, Ge; Me': Al, B, P, Si, elements in Group 1, Group 2, and Group 3 of the periodic table, halogen; $0 < x \leq 1$; $1 \leq y \leq 3$; $1 \leq z \leq 8$) may be used.

The material capable of doping and undoping lithium may be Si, $SiO_x(0 < x \leq 2)$, an Si-Y alloy (wherein Y is an element selected from the group consisting of an alkali metal, an alkaline earth metal, a Group 13 element, a Group 14 element, a transition metal, a rare earth element, and a combination thereof, but not Si), Sn, $SnO_2$, Sn-Y (wherein Y is an element selected from the group consisting of an alkali metal, an alkaline earth metal, a Group 13 element, a Group 14 element, a transition metal, a rare earth element, and a combination thereof, but not Sn), and the like, or at least one thereof may be mixed with $SiO_2$ and used. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide may be a lithium-containing titanium composite oxide (LTO), a vanadium oxide, a lithium vanadium oxide, and the like.

Meanwhile, according to an embodiment of the present invention, the electrode active material may be included in an amount of 80 wt% to 99 wt% based on the total weight of the electrode mixture film, and preferably, may be included in an amount of 85 wt% or greater, 88 wt% or greater, 90 wt% or greater, 92 wt% or greater, 93 wt% or greater, or 95 wt% or greater, or 98.5 wt% or less, 98 wt% or less, or 97.5 wt% or less. If included in the above-described range, it may be preferable both in terms of increasing the capacity and energy density of an electrode, and in terms of optimizing the function of a conductive material and a binder, which are auxiliary materials.

*Conductive material*

In an aspect, the electrode mixture film may selectively include a conductive material, wherein the conductive material is a component for further improving the conductivity of an electrode active material, and the conductive material is not particularly limited as long as it has conductivity without causing a chemical change in the battery.

For example, as the conductive material, carbon black such as acetylene black, Ketjen black, channel black, furnace black, lamp black, or thermal black; fluorocarbon powder; a graphite material such as natural graphite or artificial graphite having crystallinity; a fibrous carbon material such as carbon fiber, carbon nanotube, or carbon nanofiber; a metal fiber; metal powder such as aluminum powder or nickel powder; a conductive whisker such as zinc oxide or potassium titanate; a conductive metal oxide such as titanium oxide; a conductive polymer such as a polyphenylene derivative, or the like may be used. Specifically, for uniform mixing and improvement in conductivity of the conductive material, one or more selected from the group consisting of a graphite material, carbon black, and carbon nanotube (CNT) may be included.

The conductive material may be included in an amount of 0.1 wt% to 10.0 wt% based on the total weight of the electrode mixture film. Preferably, the conductive material may be included in an amount of 0.2 wt% or greater, 0.3 wt% or greater, 0.5 wt% or greater, or 0.7 wt% or greater, and also, may be included in an amount of 8.0 wt% or less, 6.0 wt% or less, or 5.0 wt% or less. The larger the amount of the conductive material to be input, the more advantageous it is for forming a conductive path, but the capacity may be degraded due to a relative decrease in the amount of the active material, and although it is not easy to control the input amount due to a dispersion problem, it is possible to maximize the effect of forming a conductive path by optimizing the dispersibility in the above-described range, so that it may be preferable that the conductive material is applied in the aforementioned range.

*Binder*

In an aspect, the binder performs a function of forming a three-dimensional fiber network structure such that the electrode mixture film may be free-standing, and the binder is not specified as a specific binder as long as it is fiberizable, that is, being capable of forming a three-dimensional fiber network structure in the electrode mixture film through fiberization and providing pores capable of accommodating the electrode active material, and selectively, the conductive material.

The fiberization of the binder refers to treatment of finely dividing a polymer applied as the binder into segments, and for example, may be performed by applying mechanical shear force, or the like, and as a result, the surface is loosened and fiberized, thereby forming a plurality of microfibers, through which a three-dimensional fiber network structure may be included.

The fiberizable binder may preferably include one or more selected from the group consisting of polytetrafluoroethylene (PTFE) and polyolefin, and more preferably, a halogenated polyethylene including polytetrafluoroethylene may be applied, and for example, may include polytetrafluoroethylene, polychlorotrifluoroethlyene, polydichlorodifluoroethylene, polytrichlorofluoroethylene, or polytetrachloroehtylene, and more preferably, may include polytetrafluoroethylene (PTFE).

Specifically, the polytetrafluoroethylene (PTFE) may be included in an amount of 60 wt% based on the total weight of the binder. At this time, the binder may further include one or more among polyethylene oxide (PEO), polyvinylidene fluoride (PVdF), polyvinylidene fluoride-cohexafluoropropylene (PVdF-HFP), and a polyolefin-based binder.

The binder may be included in an amount of 0.1 wt% to 10.0 wt% based on the total weight of the electrode mixture film, and preferably, may be included in an amount of 0.2 wt% or greater, 0.3 wt% or greater, 0.5 wt% or greater, 0.7 wt% or greater, or 1.0 wt% or greater, or 9.0 wt% or less, 8.0 wt% or less, 7.0 wt% or less, or 5.0 wt% or less. In the case of the fiberizable binder, if included in the above-described range, there may not be a problem in which the binder acts as a resistor, or a problem with the degree of fiberization which the binder is required to have to be manufactured in the form of a free-standing type sheet.

The electrode mixture film may have a porosity of 17 vol% to 30 vol%, preferably 19 vol% or greater, or 20 vol% or greater, and also, may have a porosity of 29 vol% or less, 28 vol% or less, 27 vol% or less, or 26 vol% or less. If the above-described range is satisfied, electrolyte solution impregnation is excellent, which may improve lifespan properties and output properties, and energy density may be excellent.

The porosity may be calculated by Equation A below.

$$[\text{Equation A}]$$

$$\text{Porosity (vol\%)} = \{1\text{-(electrode density/true density)}\} \times 100$$

In Equation A above, the true density is the density of an electrode mixture film measured by collecting the electrode mixture film to a certain size and then pressing the same with press equipment until the thickness of the film does not change, and the electrode density is the density of an electrode mixture film measured by collecting the film to a certain size.

**Method for manufacturing electrode mixture film**

A method for manufacturing an electrode mixture film is characterized by including, in a roll-to-roll process including two or more pairs of roll-pressing rolls, (S1) manufacturing a preliminary mixture film by powder-sheeting powder for an electrode including an electrode active material and a binder, or the powder for an electrode selectively further including a conductive material, and (S2) sheeting the preliminary mixture film three or more times, while reducing a roll gap of the roll-pressing rolls as the number of rounds of the sheeting increases.

The roll-to-roll process applied to the steps S1 and S2 is a process including two or more pairs of roll-pressing rolls, wherein the step S1 may be referred to as a powder sheeting process, and the step S2 may be referred to as a calendaring process, and may be a process to which a method of thermally compressing a supplied material using a plurality of roll-pressing roll(s) is applied.

The calendar device may include a roll-press part, and in the roll-press part, roll-pressing rolls may be disposed in pairs while facing each other, wherein the roll-pressing rolls may be continuously disposed in plurality in the roll-press part. If the roll-pressing rolls are continuously disposed in plurality, the temperature and peripheral speed ratio of each roll (rotational speed ratio of a pair of rolls) may be the same, or may satisfy the temperature of the calendaring roll described above, in which case, the rotational speed ratio of the roll-pressing rolls may be each independently adjusted adequately in the range of 1:1 to 1:10.

*Step S1*

Since descriptions of the electrode active material, the conductive material, and the fiberizable binder are the same as those described above, detailed descriptions thereof will be omitted, and powder for an electrode including the electrode active material, the conductive material, and the fiberizable binder may be prepared as follows.

*1) Preparation of powder for electrode*

In a process of obtaining the powder for an electrode according to an embodiment of the present invention, an electrode active material and a binder are first mixed, and selectively, a conductive material is mixed therewith to obtain a mixture composition. At this time, the above-described mixing is performed such that the electrode active material, selectively the conductive material, and the binder are uniformly distributed, and since the electrode active material, the conductive material, and the binder are mixed into a powder phase, various methods may be used without limitation as long as the methods may simply mix the electrode active material, the conductive material, and the binder. However, in the manufacturing method according to an embodiment of the present invention, a dry method of not using a solvent is applied, so that the mixing may be performed by dry mixing, and the above-described materials may be introduced into an apparatus such as a mixer or a blender to be mixed.

The mixing may be performed in a mixer at 3,000 rpm to 20,000 rpm, and preferably, may be performed at 5,000 rpm to 15,000 rpm. If performed in the above-described range, the above-described materials may be uniformly mixed, which may improve the performance of a battery. For example, the mixing rate may be 5,500 rpm or greater, 6,000 rpm or greater, or 6,500 rpm or greater, and also, may be 14,000 rpm or less, 13,000 rpm or less, or 12,000 rpm or less. While applying the above-described mixing rate, the mixing may be performed in a mixer for 0.5 minutes to 60 minutes, preferably 1 minute to 30 minutes, 1 minute to 20 minutes, or 1 minute to 10 minutes.

Next, a fiberization process for fiberizing the binder may be performed on the mixture composition obtained in the above-described mixing.

The fiberization process is not particularly limited as long as it is commonly performed, but preferably, may be performed by high temperature-low shear kneading, and for example, may be performed through a dough maker such as a kneader. The fiberizable binder is fiberized by the above-described kneading, thereby bonding or connecting the electrode active material and the conductive material powder to each other to form a mixed aggregate with a solid content of 100%.

The kneading may be performed at a rate of 10 rpm to 100 rpm, preferably 20 rpm or greater, 30 rpm or greater, 40 rpm or greater, or 45 rpm or greater, and may be performed at a rate of 80 rpm or less, 70 rpm or less, or 60 rpm or less. In addition, the kneading may be performed for 3 minutes to 60 minutes, preferably 4 minutes and more, or 5 minutes and more, and also, may be performed for 40 minutes or less, 30 minutes or less, 25 minutes or less, or 20 minutes or less. If the above-described range is satisfied, adequate fiberization may be achieved to improve the properties of a battery.

In addition, the kneading may be performed under the conditions of a high temperature and a pressure higher than normal pressure, and specifically, may be performed under the condition of a pressure higher than normal pressure.

More specifically, the kneading may be performed at a temperature of 50°C to 230°C, preferably 90°C to 200 °C, and more preferably 100 °C or higher, 110 °C or higher, or 120 °C or higher, and also, may be performed at a temperature of 180 °C or lower, 170 °C or lower, or 160 °C or lower. If the kneading is performed at a high temperature in the above-described range, the fiberization of the binder and agglomeration by the kneading may be easily achieved, and it is possible to appropriately prevent a problem of disconnection of the fiberized binder.

In addition, the kneading may be performed at a pressure equal to or higher than normal pressure, specifically, 1 atm to 3 atm, and more specifically 1.1 atm to 3 atm. If the kneading is performed in the above-described range, it is possible to adequately prevent the problem of the disconnection of the fiberized binder, and to prevent a problem in which the density of the aggregate becomes too high.

That is, according to the present invention, when the high-temperature and low-shear kneading process is performed under the conditions of a high temperature and a pressure equal to or higher than normal pressure instead of performing high-shear kneading, it may contribute to achieving the intended effect of the present invention.

Next, a step of pulverizing the mixed aggregate prepared through the above-described kneading step, thereby obtaining powder for an electrode may be performed.

The mixed aggregate prepared through the above-described kneading process may be directly subjected to calendaring (sheeting), but in this case, the mixed aggregate needs to be pressed with a strong pressure and at a high temperature to be manufactured into a film form, and accordingly, there may be a problem in that the density of the film becomes too high or a uniform film may not be obtained. Therefore, the mixed aggregate prepared as described above is pulverized to prepare powder-phase powder for an electrode.

An apparatus used in the above-described pulverizing is not particularly limited, but an apparatus such as a blender or a grinder may be preferably used.

The pulverizing may be performed at a rate of 1,000 rpm to 15,000 rpm for 5 seconds to 30 minutes, preferably at a rate of 3,000 rpm to 8,000 rpm for 30 seconds to 15 minutes. If the pulverizing is performed in the above-described range, the pulverizing is sufficiently achieved, thereby preparing powder of an adequate size to be sheeted, and fine powder may not be generated in a large amount from the aggregate.

The average particle diameter of the powder for an electrode may be 10 $\mu$m to 3000 $\mu$m, specifically 50 $\mu$m to 1500 $\mu$m, and more specifically 100 $\mu$m to 700 $\mu$m. If the above-described range is satisfied, it is possible to form an electrode mixture film having a thickness and a density which are uniform, and it is possible to secure excellent physical properties of the electrode mixture film.

Meanwhile, the powder for an electrode according to the present invention may further include, although not essential, fillers to suppress expansion of the electrode. The filler is not particularly limited as long as it is a fibrous material without causing a chemical change in a battery, but may be, for example, at least one selected from an olefin-based polymer such as polyethylene and polypropylene, and a fibrous material such as glass fiber and carbon fiber.

*2) Powder-sheeting of powder for electrode*

The step S1 is a process of introducing the powder for an electrode obtained as described above into a roll-pressing roll of the roll-to-roll process including two or more pairs of roll-pressing rolls, thereby manufacturing a preliminary mixture film in the form of a free-standing type sheet. That is, this is the very first step of manufacturing a free-standing type sheet, and a film form may be manufactured through powder-sheeting, but the strength and appearance thereof may not be suitable for use as an electrode, and even if an additional sheeting process is performed after the powder-sheeting, the state of the preliminary mixture film after the powder-sheeting rarely changes in the relative superiority thereof even after the final sheeting, so that the process may also need to be carefully controlled.

In the above-described powder-sheeting, the roll gap of the roll-pressing rolls may be 250 $\mu$m to 500 $\mu$m, preferably 280 $\mu$m to 450 $\mu$m, and more preferably 280 $\mu$m to 400 $\mu$m. The roll gap in the above-described range may minimize damage to an edge portion of the preliminary mixture film, and may also minimize cracks not only in the edge portion but also in a central portion of the preliminary mixture film, so that it is preferable that the first powder-sheeting is performed in the above-described range.

*Step S2*

The step S2 is characterized in that sheeting is performed on the powder-sheeted preliminary mixture film three or more times, wherein the roll gap of the roll-pressing rolls is gradually reduced while performing the sheeting three times.

The sheeting needs to be performed at least three times. The number of sheeting ultimately aims at gradually increasing the compression density, adjusting to a target film thickness in a non-abrupt manner, and increasing the tensile strength in the MD direction, which may be difficult to achieve without reducing the roll gap.

During the sheeting, the compression density increase rate may be controlled to be less than 5.0%. That is, it means that as the powder-sheeted preliminary mixture film is sequentially sheeted, a change in the compression density before and after the sheeting should not be extreme, and it is preferable that the roll gap is controlled such that the increase rate is 5.0% or less, and since the above-described control of the compression density increase rate affects the mechanical strength and appearance characteristics of the electrode mixture film, and may affect not only visibly recognizable damage to an edge portion, but also potential cracks which may be generated during cell assembly, charge and discharge, or the like, it may be preferable that the compression density increase rate is adequately controlled. Here, the compression density increase rate may be defined as the ratio of the change in compression density before and after sheeting to the compression density before sheeting.

In addition to the control of the compression density increase rate, in the roll-to-roll process applied to the steps S1 and S2, a roll-gap reduction rate of the roll-pressing roll may be 30% to 80%. It is preferable that the roll-gap reduction rate is controlled in association with the compression density increase rate, and in order to manufacture an electrode mixture film to satisfy the above R value, the first round of sheeting in the step S2 may preferably be performed in a roll-pressing roll having a roll gap reduced by about 60% to 80% with respect to the roll gap on which the powder-sheeting of the step S1 is performed, that is, it may be preferable that the roll-gap reduction rate is controlled to be 60% to 80%.

In addition, the step S2 may be controlled, after the first round, such that the roll gap of an N-th round of sheeting is reduced by 30% to 60% with respect to the roll gap of an (N-1)-th round of sheeting (the previous round), wherein the N may be an integer of 2 to 5. Here, the roll-gap reduction rate may be defined as the ratio of the difference in roll gaps between the (N-1) round and the N-th round with respect to the roll gap of the N-th round.

It may be important that all of the above-described process control conditions are applied, but it may be most preferential to consider that the R value, defined by the ratio of the tensile strength in the MD direction to the tensile strength in the TD direction and the ratio of the compression density has a numerical value of 5 to 10.

The three rounds of sheeting may control the roll gap during the first round of the sheeting to 100 $\mu$m to 250 $\mu$m, preferably 100 $\mu$m to 200 $\mu$m, 100 $\mu$m to 180 $\mu$m, or 100 $\mu$m to 150 $\mu$m. In addition, the roll gap during the second round of the sheeting may be 50 $\mu$m to 100 $\mu$m, 60 $\mu$m to 100 $\mu$m, or 70 $\mu$m to 100 $\mu$m, and in the case of the third round, the roll gap may be controlled to 10 $\mu$m to 70 $\mu$m, 15 $\mu$m to 70 $\mu$m, or 20 $\mu$m to 70 $\mu$m. In the above-described range, if the roll gap is controlled to satisfy the above-described compression density increase rate and roll-gap reduction rate, it is possible to manufacture an electrode mixture film with excellent mechanical strength and appearance characteristics.

The sheeting may be performed three times or more, but needs to be controlled not to be performed more than 10 times, and the sheeting should be performed at least three times, and if the above-described conditions are met, and the sheeting is performed three times or more, the above-described restriction does not particularly matter.

**Dry electrode**

A dry electrode according to the present invention includes the above-described electrode mixture film according to an embodiment of the present invention. Specifically, the dry electrode may include a current collector, and the electrode mixture film of the present invention formed on the current collector.

In addition, the dry electrode according to the present invention may be manufactured by stacking the electrode mixture film on one side or both sides of the current collector and laminating the resulting product.

The lamination may be a step of roll-pressing, thereby attaching the electrode mixture film onto the current collector. The lamination may be performed by a roll press method using a lamination roller, and at this time, the lamination roller may be maintained at a temperature of 20 °C to 200 °C.

If the dry electrode is a positive electrode, the current collector may be any one having conductivity without causing a chemical change in the corresponding battery, and is not particularly limited. For example, as the current collector, stainless steel, aluminum, nickel, titanium, fired carbon, or aluminum or stainless steel that is surface-treated with one of carbon, nickel, titanium, silver, and the like may be used.

If the dry electrode is a negative electrode, the current collector is not particularly limited as long as it has high conductivity without causing a change in the battery, and for example, copper, stainless steel, aluminum, nickel, titanium, fired carbon, copper or stainless steel that is surface-treated with one of carbon, nickel, titanium, silver, and the like, an aluminum-cadmium alloy, or the like may be used.

The thickness of the current collector may be 3 $\mu$m to 500 $\mu$m, preferably 8 $\mu$m or greater, 10 $\mu$m or greater, or 20 $\mu$m or greater, and also, may be 200 $\mu$m or less, 100 $\mu$m or less, or 80 $\mu$m or less, but is not limited thereto. In addition, microscopic irregularities may be formed on the surface of the current collector to improve adhesion of the mixture film.

The current collector may be entirely or partially coated with a conductive primer for lowering resistance and improving adhesion on the surface. Herein, the conductive primer may include a conductive material and a binder, wherein the conductive material is not limited as long as it is a material having conductivity, but may be, for example, a carbon-based material. The binder may include a fluorine-based binder (including PVDF and PVDF copolymer), an acrylic-based binder, and an aqueous binder, which may be dissolved in a solvent.

**Lithium secondary battery**

A lithium secondary battery according to the present invention includes a dry electrode as described above, and the dry electrode includes the electrode mixture film as described above on the current collector. For example, the lithium secondary battery may include a secondary battery including a liquid electrolyte and an all-solid-state battery including a solid electrolyte.

If the lithium secondary battery according to an embodiment of the present invention is a secondary battery including a liquid electrolyte, a separator may be included between a plurality of electrodes. The separator is to separate the negative electrode and the positive electrode and to provide a movement path for lithium ions, and any separator may be used without particular limitation as long as it is a separator commonly used in a lithium secondary battery, and particularly, a separator having excellent moisture-retention of an electrolyte as well as low resistance to ion movement in the electrolyte is preferable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric made of glass fiber having a high melting point, polyethylene terephthalate fiber, or the like may be used. Also, a coated separator including a ceramic component or a polymer material may be used to secure heat resistance or mechanical strength, and may selectively be used in a single-layered or multi-layered structure.

In addition, if the lithium secondary battery is an all-solid-state battery, the solid electrolyte membrane may be manufactured to perform the function of the separator.

In addition, the electrolyte may be an organic liquid electrolyte, an inorganic liquid electrolyte, a solid polymer electrolyte, a gel-type polymer electrolyte, a solid inorganic electrolyte, a molten-type inorganic electrolyte, and the like, which may be used in the manufacture of a lithium secondary battery, but is not limited thereto.

Specifically, the electrolyte may include an organic solvent and a lithium salt. As the organic solvent, any organic solvent may be used without particular limitation as long as it can serve as a medium through which ions involved in an electrochemical reaction of a battery may move. Specifically, as the organic solvent, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as R-CN (wherein R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among these, the carbonate-based solvent is preferred, and a mixture of a cyclic carbonate (e.g., ethylene carbonate or propylene carbonate) having high ion conductivity and a high dielectric constant, which may increase charge/discharge performance of the battery, and a low-viscosity linear carbonate-based compound (e.g., ethylmethyl carbonate, dimethyl carbonate, diethyl carbonate, or the like) is more preferred.

As the lithium salt, any compound may be used without particular limitation as long as it can provide lithium ions used in a lithium secondary battery. Specifically, anions of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and as the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$. $LiCl$, $LiI$, $LiB(C_2O_4)_2$, or the like may be used. The lithium salt may be used in a concentration range of 0.1 M to 4.0 M, preferably 0.5 M to 3.0 M, and more preferably 1.0 M to 2.0 M. If the concentration of the lithium salt is included in the above-described range, the electrolyte has suitable conductivity and viscosity, and thus, may exhibit excellent electrolyte performance, and lithium ions may effectively move.

In order to improve lifespan properties of a battery, suppress a decrease in battery capacity, improve discharge capacity of the battery, and the like, the electrolyte may further include one or more kinds of additives, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, aluminum trichloride, and the like. At this time, the additive may be included in an amount of 0.1 wt% to 10.0 wt% based on the total weight of the electrolyte.

In addition, the lithium secondary according to the present invention stably exhibits excellent discharge capacity, output properties, and capacity retention rate, and thus, is useful for portable devices such as mobile phones, laptop computers, and digital cameras, and in the field of electric vehicles such as hybrid electric vehicles (HEVs).

Accordingly, according to another embodiment of the present invention, a battery module including the lithium secondary battery as a unit cell, and a battery pack including the battery module are provided.

The battery module or the battery pack may be used as a power source for a power tool, an electric car including an electric vehicle (EV), a hybrid electric vehicle, and a plug-in hybrid electric vehicle (PHEV), or one or more medium-to-large devices in a system for power storage.

**Examples**

Hereinafter, embodiments of the present invention will be described in detail so that those skilled in the art may easily carry out the present invention. However, the present invention may be embodied in many different forms, and is not limited to the embodiments set forth herein.

**Examples 1 to 4 and Comparative Examples 1 to 6: Manufacturing of electrode mixture film**

96 g of $LiNi_{0.81}Co_{0.05}Mn_{0.12}Al_{0.02}O_2$ as a positive electrode active material, 1.8 g of carbon black as a conductive material, and 2.2 g of polytetrafluoroethylene (PTFE) as a fiberizable binder were mixed to prepare a mixture composition, and then the mixture composition was introduced into a kneader and kneaded for 5 minutes at an atmospheric pressure of 1.1, a temperature of 150 °C, and a rotation rate of 50 rpm to prepare an aggregate, and the aggregate was pulverized to prepare powder for an electrode.

Thereafter, the powder for an electrode was pre-sheeted with a calendaring roll in a roll-to-roll process to manufacture a preliminary mixture film, and the preliminary mixture film was sheeted under the conditions as shown in Table 1 below to manufacture an electrode mixture film (roll diameter: 200 mm, roll speed ratio: 2:3.1).

The tensile strength in the MD direction and compression density of the preliminary mixture films manufactured through powder-sheeting in Examples and Comparative Examples above were measured and are shown in Table 1 below.

The tensile strength (MPa) in the MD direction was measured using UTM equipment (ZwickRoell Co., Ltd.) in an ASTM 638 manner to measure the tensile strength after cutting the film into 50 mm (MD) x 10 mm (TD), and was measured under the conditions of a pre-load of 0.01 kg/cm and a rate of 50 mm/min. At this time, a maximum value (MPa) of force applied with the respect to the MD direction up to the point at which the sample did not break was obtained.

The compression density (g/cc) was obtained using the ratio of the weight of the introduced mixture composition to the volume of the films roll-pressed by powder-sheeting and sheeting of each round, and the density increase rate was obtained using the following equation.

Density increase rate (%) = [(compression density after sheeting) - (compression density before sheeting)] / (compression density before sheeting)

[Table 1]

| | Process | Roll gap (μm) | Roll gap reduction rate (%) | MD tensile strength (MPa) | Compression density (g/cc) | Density increase rate (%) | MD Tensile Strength x Density |
|---|---|---|---|---|---|---|---|
| Example 1 | Powder-sheeting | 300 | - | 0.37 | 2.72 | - | 1.01 |
| | 1st-round of sheeting | 90 | 70.0 | 0.45 | 2.82 | 3.68 | 1.27 |
| | 2nd-round of sheeting | 50 | 44.4 | 0.68 | 2.93 | 3.90 | 1.99 |
| | 3rd-round of sheeting | 20 | 60.0 | 0.82 | 3.07 | 4.78 | 2.52 |
| Example 2 | Powder-sheeting | 330 | - | 0.30 | 2.62 | - | 0.79 |
| | 1st-round of sheeting | 100 | 69.7 | 0.39 | 2.69 | 2.67 | 1.05 |
| | 2nd-round of sheeting | 70 | 30.0 | 0.42 | 2.78 | 3.35 | 1.17 |
| | 3rd-round of sheeting | 30 | 57.1 | 0.68 | 2.88 | 3.60 | 1.96 |
| Example 3 | Powder-sheeting | 280 | - | 0.42 | 2.80 | - | 1.18 |
| | 1st-round of sheeting | 80 | 71.4 | 0.55 | 2.90 | 3.57 | 1.60 |
| | 2nd-round of sheeting | 40 | 50.0 | 0.89 | 3.00 | 3.45 | 2.67 |
| | 3rd-round of sheeting | 20 | 50.0 | 1.10 | 3.11 | 3.67 | 3.42 |
| Example 4 | Powder-sheeting | 280 | - | 0.40 | 2.78 | - | 1.11 |
| | 1st-round of sheeting | 100 | 64.3 | 0.48 | 2.85 | 2.52 | 1.37 |
| | 2nd-round of sheeting | 40 | 60.0 | 0.59 | 2.92 | 2.46 | 1.72 |
| | 3rd-round of sheeting | 20 | 50.0 | 0.95 | 2.98 | 2.05 | 2.83 |
| Comparative Example 1 | Powder-sheeting | 300 | - | 0.32 | 2.70 | - | 0.86 |
| | 1st-round of sheeting | 30 | 90.0 | 0.35 | 2.79 | 3.33 | 0.98 |
| Comparative Example 2 | Powder-sheeting | 330 | - | 0.25 | 2.52 | - | 0.63 |
| | 1st-round of sheeting | 100 | 69.7 | 0.32 | 2.64 | 4.76 | 0.84 |
| | 2nd-round of sheeting | 20 | 80.0 | 0.33 | 2.80 | 6.06 | 0.92 |
| Comparative Example 3 | Powder-sheeting | 300 | - | 0.34 | 2.71 | - | 0.92 |
| | 1st-round of sheeting | 50 | 83.3 | 0.38 | 2.85 | 5.17 | 1.08 |
| | 2nd-round of sheeting | 20 | 60.0 | 0.41 | 3.02 | 5.96 | 1.24 |

(continued)

|  | Process | Roll gap (μm) | Roll gap reduction rate (%) | MD tensile strength (MPa) | Compression density (g/cc) | Density increase rate (%) | MD Tensile Strength x Density |
|---|---|---|---|---|---|---|---|
| Comparative Example 4 | Powder-sheeting | 330 | - | 0.11 | 2.50 | - | 0.28 |
|  | 1 st-round of sheeting | 150 | 54.5 | 0.16 | 2.55 | 2.00 | 0.41 |
|  | 2nd-round of sheeting | 70 | 53.3 | 0.20 | 2.60 | 1.96 | 0.52 |
| Comparative Example 5 | Powder-sheeting | 330 | - | 0.33 | 2.60 | - | 0.86 |
|  | 1 st-round of sheeting | 100 | 69.7 | 0.33 | 2.63 | 1.15 | 0.87 |
|  | 2nd-round of sheeting | 80 | 20.0 | 0.34 | 2.64 | 0.38 | 0.90 |
|  | 3rd-round of sheeting | 60 | 25.0 | 0.35 | 2.65 | 0.38 | 0.93 |
| Comparative Example 6 | Powder-sheeting | 300 | - | 0.30 | 2.63 | - | - |
|  | 1st-round of sheeting | 220 | 26.7 | 0.32 | 2.64 | 1.10 | 0.37 |
|  | 2nd-round of sheeting | 150 | 31.8 | 0.34 | 2.66 | 2.13 | 0.83 |
|  | 3rd-round of sheeting | 50 | 66.7 | 0.39 | 2.71 | 4.74 | 2.42 |

**Experimental Example 1: Measurement of physical properties of electrode mixture film**

For the electrode mixture film manufactured in each of Examples and Comparative Examples above, the tensile strength both in the MD direction and in the TD direction was measured, and the elongation was obtained by the following methods, and appearance characteristics thereof were evaluated.

1) Tensile strength (MPa) and elongation (%): The tensile strength was measured using UTM equipment (ZwickRoell Co., Ltd.) in an ASTM 638 manner after cutting the electrode mixture film into 50 mm (MD) x 10 mm (TD), and was measured under the conditions of a pre-load of 0.01 kg/cm and a rate of 50 mm/min. At this time, using a maximum value of force applied with respect to each of the MD direction and the TD direction up to a point of time at which the sample did not break, the tensile strength (MPa) was obtained, and using the ratio (percentage of the ratio of the length before breakage to the initial length) of the length of the specimen increased until breakage compared to the initial length of the specimen, elongation (%) was obtained.

2) Compression density (g/cc): The compression density was obtained using the ratio of the weight of the introduced mixture composition to the volume of the films roll-pressed by powder-sheeting and sheeting of each round.

[Table 2]

|  | Tensile strength (MPa) | | | Elongation (%) | Compression density (g/cc) | R |
|---|---|---|---|---|---|---|
|  | MD | TD | MD/TD | | | |
| Example 1 | 0.82 | 0.32 | 2.56 | 3.5 | 3.07 | 7.87 |
| Example 2 | 0.68 | 0.25 | 2.72 | 3.9 | 2.88 | 7.83 |
| Example 3 | 1.10 | 0.51 | 2.16 | 3.4 | 3.11 | 6.71 |
| Example 4 | 0.95 | 0.31 | 3.06 | 3.2 | 2.98 | 9.13 |
| Comparative Example 1 | 0.35 | 0.21 | 1.67 | 3.6 | 2.79 | 4.65 |
| Comparative Example 2 | 0.33 | 0.27 | 1.22 | 3.4 | 2.80 | 3.42 |
| Comparative Example 3 | 0.41 | 0.28 | 1.46 | 3.5 | 3.02 | 4.42 |
| Comparative Example 4 | 0.20 | 0.05 | 4.00 | 2.0 | 2.60 | 10.40 |
| Comparative Example 5 | 0.35 | 0.20 | 1.75 | 2.1 | 2.65 | 4.64 |

(continued)

| | Tensile strength (MPa) | | | Elongation (%) | Compression density (g/cc) | R |
|---|---|---|---|---|---|---|
| | MD | TD | MD/TD | | | |
| Comparative Example 6 | 0.39 | 0.27 | 1.44 | 3.5 | 2.71 | 3.91 |

Referring to Table 2 above, it may be seen that in the case of Examples 1 to 4 in which the roll-gap reduction rate and the density increase rate were well controlled, the mechanical properties were excellent, so that it was possible to obtain an electrode mixture film satisfying the R value range, but in the case of Comparative Examples 1 to 4 in which the sheeting process was not performed three or more times, the mechanical properties were poor, and accordingly, the R value was less than 5 or greater than 10. In addition, it may be confirmed that in the case of Comparative Examples 5 and 6 in which the sheeting was performed three times but the roll-gap reduction rate was not adequately controlled, the mechanical properties were also poor, and accordingly, the R value was less than 5.

**Experimental Example 2: Evaluation of electrode mixture film**

For the appearance of the electrode mixture films of Examples and Comparative Examples, the degree of tearing in an edge portion was observed to evaluate the appearance by the following method, and the electrode resistance was measured.

**1) Appearance evaluation (cm):** Among the lengths in the width direction perpendicular to the longitudinal direction of an electrode mixture film having a length of 30 cm, the length of a portion that was most deeply torn, and thus, has the shortest length in the width direction was measured.

**2) Electrode layer resistance ($\Omega$cm):** The electrode mixture film manufactured in each of Examples and Comparative Examples was placed on an aluminum foil (thickness of 15 $\mu$m) equipped with a conductive primer layer, and laminated through a roll press maintained at 150 °C to manufacture a dry electrode. After cutting each manufactured dry electrode into 100 mm x 100 mm, using an MP resistance measurement method, a current of 100 uA was applied to the electrode and a resistance value between the electrode mixture film and the current collector layer was measured using a potential difference measured among 46 probes.

[Table 3]

| | Appearance evaluation (cm) | Electrode resistance ($\Omega$cm) |
|---|---|---|
| Example 1 | 26.0 | 7.5 |
| Example 2 | 25.4 | 8.5 |
| Example 3 | 24.0 | 7.8 |
| Example 4 | 25.0 | 8.2 |
| Comparative Example 1 | 15.0 | 10.5 |
| Comparative Example 2 | 19.0 | 10.2 |
| Comparative Example 3 | 17.0 | 9.8 |
| Comparative Example 4 | 20.0 | 11.5 |
| Comparative Example 5 | 23.0 | 12.3 |
| Comparative Example 6 | 18.0 | 10.8 |

Referring to Table 3 above, it may be confirmed that in the case of Examples 1 to 4, the degree of tearing at both ends of the film was alleviated, so that the width of a normal product was measured to be significantly longer than that of Comparative Examples, and the resistance of the electrode layer was also at an excellent level. However, in the case of Comparative Examples 1 to 6 in which the R value was not satisfied, it may be confirmed that the width of a normal product was significantly narrow in the appearance evaluation, so that the quality was quite poor, and the resistance was at a very high level, which may be expected to be due to the failure to properly control the process, thereby preventing the binder from being adequately dispersed during the sheet molding and the failure to control the tensile strength in the MD and TD directions and the density value.

**Claims**

1. An electrode mixture film, comprising:

   a binder having a three-dimensional fiber network structure; and
   an electrode active material accommodated in the fiber network structure,
   wherein an R value defined by Equation 1 below is 5.0 to 10.0:

$$[\text{Equation 1}]$$

$$R = [d \times (TS_M)]/[(TS_T)]$$

   wherein in Equation 1 above, the d is a compression density of the electrode mixture film, and is the number of no units when the unit is g/cc, the $TS_M$ is a tensile strength in a MD direction of the electrode mixture film, and the $TS_T$ is a tensile strength in a TD direction of the electrode mixture film.

2. The electrode mixture film of claim 1, wherein R defined by Equation 1 above is 6.5 to 9.5.

3. The electrode mixture film of claim 1, wherein the electrode mixture film has a ratio ($TS_M/TS_T$) of the tensile strength in the MD direction ($TS_M$) to the tensile strength in the TD direction ($TS_T$) of 1.5 to 3.5.

4. The electrode mixture film of claim 1, wherein the electrode mixture film has a ratio ($TS_M/TS_T$) of the tensile strength in the MD direction ($TS_M$) to the tensile strength in the TD direction ($TS_T$) of 2.0 to 3.2.

5. The electrode mixture film of claim 1, wherein the electrode mixture film has a compression density of 2.4 g/cc to 3.4 g/cc.

6. The electrode mixture film of claim 1, wherein the electrode active material comprises a lithium transition metal containing one or more selected from the group consisting of nickel (Ni), cobalt (Co), manganese (Mn), and iron (Fe).

7. The electrode mixture film of claim 1, wherein the binder comprises polytetrafluoroethylene (PTFE).

8. A method for manufacturing the electrode mixture film of claim 1, comprising:

   in a roll-to-roll process including two or more pairs of roll-pressing rolls,
   (S1) manufacturing a preliminary mixture film by powder-sheeting powder for an electrode including an electrode active material and a binder; and
   (S2) sheeting the preliminary mixture film three or more times, while reducing a roll gap of the roll-pressing rolls as the number of rounds of the sheeting increases.

9. The method of claim 8, wherein the step S2 performs the sheeting such that the tensile strength in the MD direction of the electrode mixture film is 0.65 MPa or greater.

10. The method of claim 8, wherein the step S2 is controlled such that a compression density increase rate of the preliminary mixture film by the sheeting is 5.0% or less.

11. The method of claim 8, wherein the step S2 is controlled such that the roll gap of the first round of sheeting is reduced by 60% to 80% with respect to the roll gap of the powder-sheeting of the step S1.

12. The method of claim 8, wherein the step S2 is controlled such that the roll gap of an N-th round of sheeting is reduced by 30% to 60% with respect to the roll gap of an (N-1)-th round of sheeting, wherein the N is an integer of 2 to 5.

13. A lithium secondary battery including a dry electrode, wherein the dry electrode includes the electrode mixture film of claim 1.

14.  The lithium secondary battery of claim 13, wherein the dry electrode is a dry positive electrode.

## INTERNATIONAL SEARCH REPORT

International application No.

**PCT/KR2024/019310**

| A. | CLASSIFICATION OF SUBJECT MATTER |
|---|---|

**H01M 4/131**(2010.01)i; **H01M 4/1391**(2010.01)i; **H01M 4/525**(2010.01)i; **H01M 4/505**(2010.01)i; **H01M 4/62**(2006.01)i; **H01M 4/04**(2006.01)i; **H01M 10/052**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/131(2010.01); H01M 10/052(2010.01); H01M 10/0525(2010.01); H01M 4/13(2010.01); H01M 50/586(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 바인더(binder), 활물질(active material), 전극(electrode), 필름(film), 인장강도 (tensile strength), 밀도(density), 이차전지(secondary battery)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2023-0149743 A (LG ENERGY SOLUTION, LTD.) 27 October 2023 (2023-10-27) See claims 1, 4 and 5, and paragraphs [0064], [0079], [0080], [0082], [0084], [0126], [0139], [0141] and [0175]. | 1-14 |
| A | KR 10-2023-0040922 A (LG ENERGY SOLUTION, LTD.) 23 March 2023 (2023-03-23) See claims 1 and 4. | 1-14 |
| A | KR 10-2023-0135543 A (LG ENERGY SOLUTION, LTD.) 25 September 2023 (2023-09-25) See claims 1, 2, 7 and 12. | 1-14 |
| A | KR 10-2022-0105120 A (LG ENERGY SOLUTION, LTD.) 26 July 2022 (2022-07-26) See claims 1, 2, 4 and 14. | 1-14 |
| A | KR 10-2023-0137270 A (LG ENERGY SOLUTION, LTD.) 04 October 2023 (2023-10-04) See claims 1, 7, 10 and 12. | 1-14 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **10 March 2025** | **10 March 2025** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/019310**

| Patent document cited in search report | | | Publication date (day/month/year) | Patent family member(s) | | | Publication date (day/month/year) |
|---|---|---|---|---|---|---|---|
| KR | 10-2023-0149743 | A | 27 October 2023 | None | | | |
| KR | 10-2023-0040922 | A | 23 March 2023 | CN | 116547826 | A | 04 August 2023 |
| | | | | EP | 4213243 | A1 | 19 July 2023 |
| | | | | JP | 2023-547114 | A | 09 November 2023 |
| | | | | KR | 10-2024-0099124 | A | 28 June 2024 |
| | | | | KR | 10-2678680 | B1 | 26 June 2024 |
| | | | | US | 2023-0402609 | A1 | 14 December 2023 |
| | | | | WO | 2023-043245 | A1 | 23 March 2023 |
| KR | 10-2023-0135543 | A | 25 September 2023 | CN | 118202482 | A | 14 June 2024 |
| | | | | EP | 4394912 | A1 | 03 July 2024 |
| | | | | JP | 2024-530280 | A | 16 August 2024 |
| | | | | WO | 2023-177244 | A1 | 21 September 2023 |
| KR | 10-2022-0105120 | A | 26 July 2022 | CN | 116325211 | A | 23 June 2023 |
| | | | | EP | 4207338 | A1 | 05 July 2023 |
| | | | | US | 2023-0369557 | A1 | 16 November 2023 |
| | | | | WO | 2022-158759 | A1 | 28 July 2022 |
| KR | 10-2023-0137270 | A | 04 October 2023 | None | | | |

Form PCT/ISA/210 (patent family annex) (July 2022)